Europäisches Patentamt

European Patent Office

Office européen des brevets

(11) Numéro de publication: **0 192 524 B1**

(12) **FASCICULE DE BREVET EUROPEEN**

(45) Date de publication du fascicule du brevet:
17.05.89

(51) Int. Cl.⁴: **F16L 37/00, F28F 9/06**

(21) Numéro de dépôt: 86400163.1

(22) Date de dépôt: 28.01.86

(54) **Dispositif de fixation d'un tube sur une plaque à tubes.**

(30) Priorité: 04.02.85 FR 8501503

(43) Date de publication de la demande:
27.08.86 Bulletin 86/35

(45) Mention de la délivrance du brevet:
17.05.89 Bulletin 89/20

(84) Etats contractants désignés:
BE DE GB IT NL

(56) Documents cités:
BE-A- 696 253
DE-A- 2 036 398
DE-A- 3 245 380
FR-A- 2 380 488
FR-A- 2 528 942
FR-A- 2 542 437
GB-A- 2 065 812
GB-A- 2 086 513
US-A- 2 391 063
US-A- 3 240 502
US-A- 3 659 880
US-A- 3 837 690
US-A- 4 429 886

(73) Titulaire: COMMISSARIAT A L'ENERGIE ATOMIQUE,
31/33, rue de la Fédération, F-75015 Paris(FR)

(72) Inventeur: Bandelier, Philippe, 82 Chemin des
Ayguinards, F-38240 Meylan(FR)
Inventeur: Halotier, Daniel, 23, rue Jean-Baptiste
Clément, F-38130 Echirolles(FR)
Inventeur: Lauro, Fernand, 33, rue Thiers,
F-38000 Grenoble(FR)

(74) Mandataire: Mongrédien, André et al, c/o
BREVATOME 25, rue de Ponthieu, F-75008 Paris(FR)

**Description**

L'invention concerne un dispositif de fixation d'un tube sur une plaque à tubes, comportant au moins un trou pour recevoir une bague pourvue d'un épaulement et un manchon, le manchon et la bague étant prévus pour enserrer le tube.

On connaît, par la demande de brevet français FR-A-2 542 437, un dispositif de fixation d'un tube sur une plaque conforme au type défini ci-dessus. Les première et seconde plaques de l'échangeur de chaleur comportent des trous prévus pour la fixation des extrémités des tubes. Chaque extrémité est fixée à l'une des plaques à l'aide d'un manchon et d'une bague pourvue d'un épaulement et insérable dans un trou. Le manchon et la bague sont prévus pour enserrer l'extrémité du tube. L'épaulement est prévu pour venir en butée contre la plaque après insertion de la bague dans le trou.

Sur un tube que l'on veut fixer, on enfile d'abord une bague, puis on engage légèrement en force un manchon que l'on pousse pour que le tube se trouve pris entre la face interne de la bague et la face externe du manchon. Puis l'on repousse la bague dans le trou jusqu'à ce qu'elle vienne buter contre la première plaque. Le tube est passé au travers du trou de la seconde plaque. On enfile la bague sur la deuxième extrémité du tube et on enfonce le manchon dans le tube, après quoi le manchon est repoussé sur la bague. Enfin, les manchons et les bagues sont repoussés avec les tubes sur la seconde plaque. Lorsque tout le faisceau de tubes a été monté, on leste la seconde plaque par des moyens appropriés afin de maintenir les tubes droits.

Cependant, un inconvénient d'un dispositif de fixation de ce type réside dans le fait que, pour fixer la deuxième extrémité du tube sur la deuxième plaque, les opérations de montage de la bague et du manchon sur le tube doivent être effectuées sur place, c'est-à-dire au moment même du tubage. Pour des raisons de commodité, il serait souhaitable qu'elles puissent être effectuées préalablement dans un atelier.

L'invention concerne précisément un dispositif de fixation d'un tube sur une plaque qui résout ce problème. Ce dispositif permet de monter un tube entre deux plaques sans avoir d'autre opération qu'un encliquetage à effectuer sur le lieu de montage. D'autre part, le dispositif doit permettre de fixer des tubes sur des plaques d'épaisseurs variées. La liaison entre la plaque et le tube doit être assurée de manière étanche.

L'invention a donc pour objet un dispositif de fixation d'un tube sur une plaque à tube comprenant un cylindre droit, creux, dont une extrémité présente un alésage interne tronconique coopérant avec un manchon tronconique de même conicité, caractérisé en ce que ledit cylindre est pourvu sur au moins une partie de sa surface externe de crans, ledit dispositif comprenant en outre:
- une collerette pourvue de moyens de fixation à la plaque à tubes et de moyens de fixation au cylindre, ces moyens coopérant avec les crans; et
- des moyens d'étanchéité entre la collerette et le cylindre.

Selon un mode de réalisation, les moyens d'étanchéité entre la collerette et le cylindre sont constitués par des lèvres.

Selon un autre mode de réalisation, les moyens d'étanchéité entre la collerette et le cylindre sont constitués par des cannelures circonférentielles formées sur la surface externe du cylindre.

Selon un autre mode de réalisation, les moyens de fixation de la collerette sur la plaque à tubes sont constitués par une série de cliquets élastiques solidaires de la collerette.

Selon un autre mode de réalisation, les moyens de fixation de la collerette sur la plaque à tubes sont constitués par des contre-bagues de serrage comportant des crans à profil de sapins complémentaires à des crans usinés sur la collerette, lesdites contre-bagues assurant la fixation de la collerette au cylindre.

Selon un autre mode de réalisation les moyens de fixation de la collerette sur le cylindre sont constitués par une série de cliquets élastiques solidaires de la collerette.

Selon un autre mode de réalisation, le cylindre comporte des encoches situées sur la face intérieure, opposée à la partie tronconique, destinées à recevoir un lest de montage.

Enfin, selon un dernier mode de réalisation, la collerette est munie de godrons.

D'autres caractéristiques et avantages de l'invention apparaîtront encore à la lecture de la description qui suit de plusieurs exemples de réalisation de l'invention donnés à titre illustratif en référence aux figures annexées, sur lesquelles:

- la figure 1 est une vue en perspective d'un premier mode de réalisation d'un dispositif de fixation d'un tube sur une plaque à tubes;
- la figure 2 est une vue en coupe du mode de réalisation de l'invention représenté sur la figure 1;
- les figures 3 et 4 représentent deux autres modes de réalisation de l'invention;
- la figure 5 représente une autre réalisation des moyens d'étanchéité entre le cylindre et la collerette.

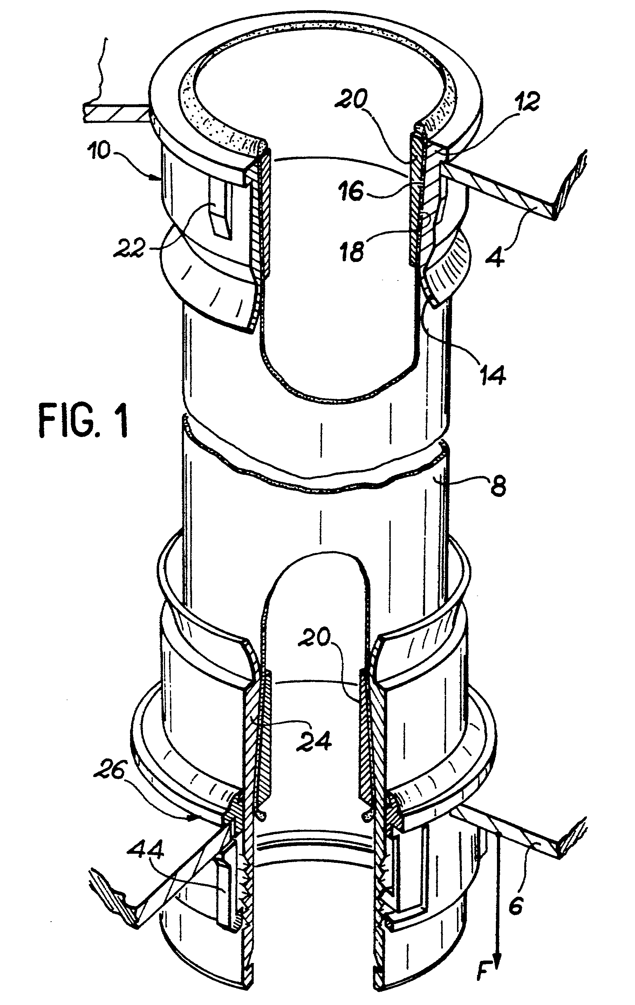

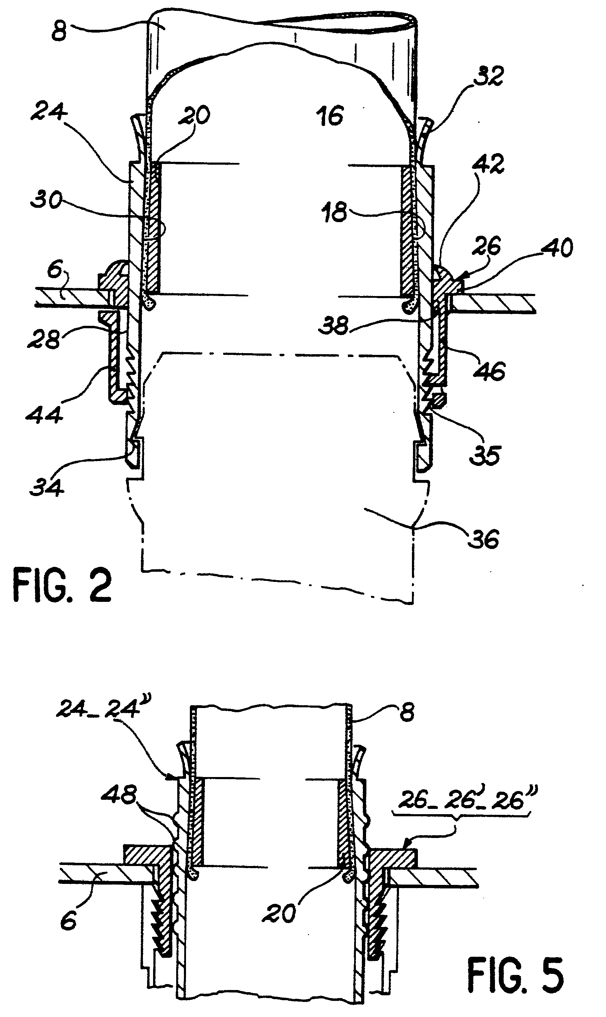

L'exemple de réalisation représenté sur les figures 1 et 2 est appliqué à un échangeur de chaleur. Cet échangeur comporte une plaque à tubes supérieure 4 et une plaque à tubes inférieure 6. Chacune de ces plaques à tubes comporte une série de trous répartis en un réseau régulier pour recevoir les tubes qui forment un faisceau parallèle. Un seul trou a été représenté sur chacune des plaques inférieure et supérieure afin de ne pas surcharger le dessin. Un tube 8 est fixé à son extrémité supérieure à la plaque 4 et à son extrémité inférieure à la plaque 6. Un fluide primaire circule à l'intérieur des tubes tels que le tube 8 et un fluide secondaire circule à l'extérieur du faisceau des tubes. Le fluide primaire et le fluide secondaire échangent de la chaleur. Entre les plaques 4 et 6 s'étendent généralement plusieurs grilles intermédiaires destinées à maintenir un écartement convenable des tubes de l'échangeur. Etant donné que ces grilles ne font pas partie de l'invention proprement dite, elles n'ont pas été représentées sur les figures. La plaque 4 est fixe, la plaque mobile 6 est soumise à une force de traction F afin de maintenir les tubes rectilignes (flèche F). Dans l'exemple de réalisation décrit, les tubes tels que 8 sont réalisés en une matière plastique telle que le polyéthylène, le polypropylène, le polyfluorure de vinylidène ou un polyamide. Etant donné que les matières plastiques sont peu conductrices de la chaleur, l'épaisseur des tubes doit être très faible, inférieure à 500 micromètres (μm) et de préférence comprise entre 30 et 200 micromètres. Cette faible épaisseur permet de diminuer les coûts de l'échangeur, assure aux tubes une grande souplesse facilitant le montage et favorise la résistance à l'encrassement. Les plaques 4 et 6 sont réalisées en matière plastique ou en un métal, par exemple l'acier, revêtu d'un revêtement protecteur contre la corrosion tel qu'un émail hautes températures ou du PTFE.

Conformément à l'objet de l'invention, on souhaite que les tubes 8 puissent être mis en place sur les plaques de l'échangeur sans autre intervention qu'un encliquetage pouvant être réalisé de manière rapide et sans nécessiter le recours d'un outillage particulier, les opérations d'assemblage délicates étant effectuées préalablement à l'établi.

La fixation de l'extrémité supérieure du tube 8 sur la plaque supérieure 4, qui ne fait pas partie de l'invention proprement dite, est effectuée au moyen d'une bague 10 comportant un épaulement 12. Dans l'exemple de réalisation représenté, la bague 10 porte en outre une fine languette périphérique évasée 14 qui permet de déporter la bavure de moulage vers une partie qui n'est pas en contact avec le tube 8. Toutefois, cette languette n'est pas indispensable. La bague 10 comporte un alésage tronconique 16 destiné à coopérer avec un diamètre extérieur tronconique 18 de même conicité, formé sur un manchon 20. Pour fixer le tube 8 sur la plaque supérieure 4, on enfile d'abord une bague 10 sur le tube 8, ce qui est aisément réalisé en le pliant grâce à sa minceur. A l'extrémité du tube, on engage ensuite à force un manchon 20, après quoi on pousse sur le manchon pour que le tube 8 se trouve pris entre la face interne 16 de la bague 10 et la face externe 18 du manchon. Ces opérations peuvent s'effectuer grâce à l'outillage décrit dans la demande de brevet français déposée le même jour par le demandeur. Puis l'on repousse la bague dans le trou pratiqué dans la plaque 4 jusqu'à ce qu'elle vienne en butée par l'intermédiaire de l'épaulement 12. On remarque en outre que le diamètre extérieur de la bague 10 comporte des cordons longitudinaux 22 en surépaisseur, encore appelés "godrons". Ces surépaisseurs ont pour fonction d'absorber les différents jeux causés par les tolérances sur les dimensions de la bague 10, d'une part, et sur le diamètre de perçage des trous dans les plaques tubulaires, d'autre part. Elles permettent l'ajustage précis de la bague dans le trou.

Si la fixation du tube 8 à la plaque inférieure 6 était réalisée de la même manière que la fixation à la plaque 4, la deuxième bague 10 que l'on utiliserait alors, ainsi que le manchon 20, devraient être montés sur le tube 8 sur le lieu de montage. En effet, les bagues 10 étant introduites par l'extérieur des plaques à tubes, c'est-à-dire à partir de la face de la plaque à tubes qui se trouve à l'extérieur de la zone d'échange, on ne peut monter à l'avance qu'une seule bague 10 et un manchon 20 sur un tube 8. La deuxième bague et le deuxième manchon devraient être mis en place au moment du montage des tubes dans l'échangeur.

Le dispositif de fixation du tube 8 sur la plaque 6 représenté en perspective à la partie inférieure de la figure 1 et en coupe sur la figure 2 permet d'effectuer toutes les opérations délicates à l'établi et de tuber l'échangeur sans avoir d'autre opération à effectuer qu'un encliquetage des tubes sur les plaques tubulaires inférieures 6. Ce dispositif se compose de trois pièces distinctes: un cylindre 24, une collerette 26 et un manchon 20 qui présente une configuration identique à celle du manchon qui fait partie du dispositif de fixation du tube à la plaque supérieure 4 décrit précédemment et a par conséquent été désigné par la même référence 20.

Le cylindre 24 se compose d'une partie 28 sensiblement cylindrique, dans laquelle est formé un alésage tronconique 30 dont la fonction est identique à celle de l'alésage tronconique 16 de la bague 10 du dispositif de fixation du tube à plaque 4. A la partie supérieure du cylindre 24, on trouve une languette périphérique évasée 32 qui permet de déporter la bavure de moulage vers une partie qui n'est pas en contact avec le tube. Enfin, à la partie inférieure du cylindre, on trouve des encoches 34 destinées à l'encliquetage d'un lest 36 représenté en traits mixtes et dont le rôle sera expliqué ultérieurement.

La collerette 26 comporte une partie cylindrique 38 dont le diamètre intérieur est sensiblement égal au diamètre extérieur de la partie cylindrique 28 du cylindre 24. A la partie supérieure du cylindre 38, on trouve un épaulement 40 destiné à venir en appui sur la face supérieure de la plaque à tubes 6. Une lèvre d'étanchéité 42 solidaire de l'épaulement 40 de la collerette 26 assure l'étanchéité au fluide entre le cylindre 24 et la collerette 26. La fixation de la collerette 26 sur la plaque à tubes 6 est assurée au moyen d'un pluralité de cliquets 44 découpés dans la surface du cylindre 38 de la collerette et répartis sur la périphérie de ce dernier. Ces cliquets sont élastiques et s'effacent au moment de l'introduction de la collerette 26 dans le trou de la plaque à tubes 6, puis ils reprennent leur place, immobilisant ainsi la collerette. Afin que la collerette puisse s'appliquer à des plaques à tubes d'épaisseurs différentes, il existe différentes collerettes sur lesquelles les cliquets 44 sont formés à la périphérie du cylindre 38 à différentes hauteurs par rapport au plan de pose sur la plaque tubulaire 6.

La collerette 26 comporte en outre des cliquets de fixation 46 terminés par une extrémité destinée à s'engager dans des crans 35 prévus dans le cylindre 24. Plusieurs cliquets de fixation tels que 46 sont répartis à la périphérie de la collerette 26. Ils peuvent être avantageusement alternés avec les cliquets 44. Ainsi, dans l'exemple de réalisation décrit, une collerette 26 comporte quatre cliquets 44 situés à 90° l'un de l'autre et quatre cliquets 46 intercalés à angle régulier entre les cliquets 44. Le cylindre 24 comporte plusieurs crans 35 à profil en sapin ou à rochet qui se suivent de manière à permettre un réglage de la position du cylindre 24 par rapport à la collerette 26 et l'adapter aux tolérances sur la distance entre la plaque 4 et la plaque 6, ainsi qu'aux tolérances de montage du dispositif de fixation à chacune des extrémités d'un tube 8.

Enfin, comme on l'a expliqué précédemment, le manchon 20 présente une forme extérieure tronconique 18 de même conicité que l'alésage tronconique 30 du cylindre 24 pour venir enserrer le tube 8.

Avec le dispositif qui vient d'être décrit en référence aux figures 1 et 2, le montage et la fixation d'un tube 8 sur les plaques 4 et 6 de l'échangeur s'effectuent de la manière suivante.

La bague 10 et le manchon 20 sont d'abord montés, comme décrit précédemment, à l'extrémité du tube 8 destinée à être fixée à la plaque supérieure 4. Ces opérations peuvent être effectuées à l'établi. On monte ensuite un cylindre 24 et un manchon 20 à l'autre extrémité du tube destinée à être fixée à la plaque inférieure 6 de la même manière et avec le même outillage qui va servir au montage de la bague 10 et du manchon 20 à l'extrémité supérieure du tube 8. Cette deuxième opération est également effectuée à l'établi, préalablement au tubage de l'échangeur. Par ailleurs, on insère une collerette 26 dans chacun des trous de la plaque à tubes 6. Cette opération est effectuée très aisément et très rapidement grâce aux cliquets de fixation 44 qui se déforment lors du passage dans le trou puis reprennent élastiquement leur position initale pour venir immobiliser la collerette 26. Un lest 36 (voir figure 2) est alors inséré dans les encoches 34 prévues à la partie inférieure du cylindre 24. Le lest 36 présente une extrémité inférieure conique de manière à faciliter son centrage dans les trous des plaques à tubes. Il exerce une force de traction verticale dirigée vers le bas, qui suffit à entraîner le tube 8 et à encliqueter le cylindre 24 sur la collerette 26. Si nécessaire lors de la récupération du lest on effectue une traction sur ce dernier pour parfaire l'encliquetage.

Le montage des tubes de l'échangeur peut ainsi être effectué rapidement sur place, sans outillage spécialement adapté.

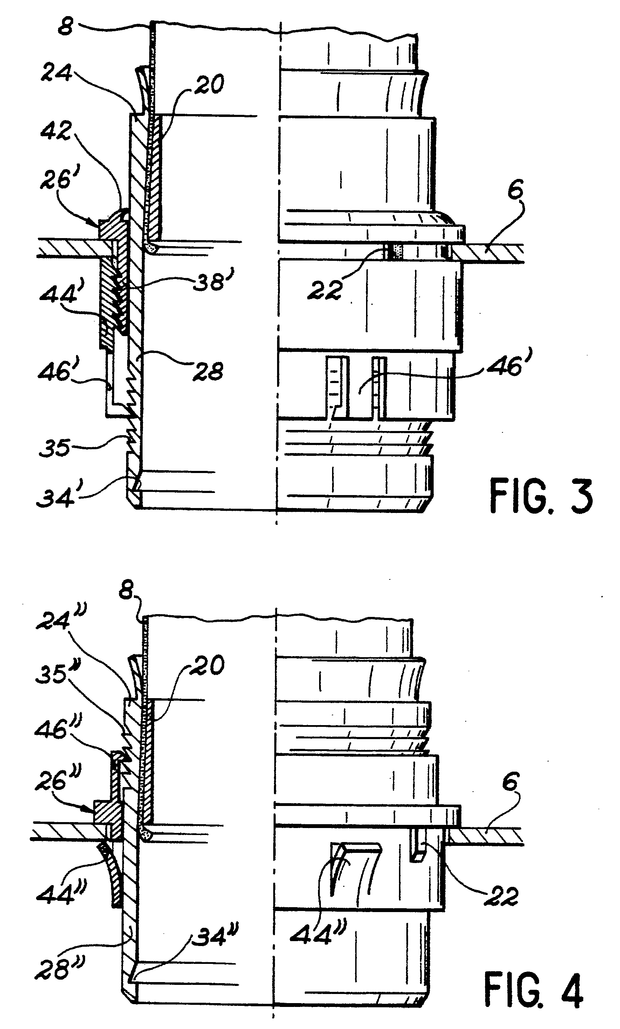

On a représenté sur la figure 3 un deuxième mode de réalisation du dispositif de fixation d'un tube sur une plaque conforme à l'invention. Dans ce mode de réalisation, le cylindre 24 est réalisé de manière exactement identique au cylindre 24 du mode de réalisation des figures 1 et 2. En revanche, la réalisation de la collerette 26 est différente. Plus précisément, les moyens qui permettent d'immobiliser cette collerette 26' sur la plaque à tubes 6 sont différents. Les cliquets 44 qui assurent ce rôle dans le mode de réalisation précédent ont été remplacés par une contrebague de serrage 44'. Cette contrebague de serrage peut être encliquetée sur la partie cylindrique 38' de la collerette 26' au moyen de crans formés sur chacune de ces deux pièces. Ces crans permettent d'adapter la collerette 26' à des épaisseurs différentes de la plaque à tubes 6. Les cliquets 46 qui existaient dans les modes de réalisation des figures 1 et 2, sont ici formés sur la contrebague de serrage 44', mais leur fonction est exactement identique. Ils portent la référence 46'. La lèvre d'étanchéité 42 formée sur la collerette 26' est elle aussi identique à la lèvre 42 du mode de réalisation précédent.

On a représenté sur la figure 4 un troisième mode de réalisation de l'invention. La réalisation du cylindre 24 est identique à celle représentée sur les figures 1 à 3, à l'exception des crans 35 en forme de sapins qui sont situés au-dessus de la plaque à tubes 6 au lieu d'être situés en-dessous de celle-ci. La collerette 26" est fixée sur la plaque à tubes 6 au moyen d'un pluralité de cliquets 44" répartis régulièrement à sa périphérie, et dont deux sont visibles sur la figure 4. Le cliquet circulaire 46", destiné à venir coopérer avec les crans 35" du cylindre 24", est situé au-dessus de la plaque à tubes 6, en considérant la figure 4. Dans ce mode de réalisation, les fonctions de blocage du cylindre 24" et d'étanchéité entre ce cylindre et la collerette 26" sont assurées par la même partie de la collerette, à savoir par les cliquets circulaires 46".

On a représenté sur la figure 5 un autre mode de réalisation des moyens qui permettent d'assurer une étanchéité entre un cylindre 24 et une collerette 26, 26', 26". Ce mode de réalisation peut s'appliquer à l'un quelconque des modes de réalisation décrits en référence aux figures 1 et 4. L'étanchéité est obtenue au moyen d'une série de cannelures circulaires 48 formées en relief et frottant sur la collerette 26, 26', 26". Les cannelures 48 remplacent la lèvre souple d'étanchéité 42 prévue dans les modes de réalisation des figures 1, 2 et 3.

## Revendications

1. Dispositif de fixation d'un tube (8) sur une plaque à tubes (5) comprenant un cylindre droit, creux (24, 24") dont une extrémité présente un alésage interne tronconique (30) coopérant avec un manchon tronconique (20) de même conicité, caractérisé en ce que ledit cylindre est pourvu sur au moins une partie de sa surface externe (28, 28") de crans (35), ledit dispositif comprenant en outre:
   – une collerette (26, 26', 26") pourvue de moyens de fixation (44, 44', 44") à la plaque à tube et de moyens (46, 46', 46") de fixation au cylindre (24, 24"), ces moyens (46, 46', 46") coopérant avec les crans (35); et
   – des moyens d'étanchéité (42, 48) entre la collerette (26, 26', 26") et le cylindre (24, 24").

2. Dispositif selon la revendication 1, caractérisé en ce que les moyens d'étanchéité entre la collerette (26, 26', 26") et le cylindre (24, 24") sont constitués par une lèvre élastique (42).

3. Dispositif selon la revendication 1, caractérisé en ce que les moyens d'étanchéité entre la collerette (26, 26', 26") et le cylindre (24, 24") sont constitués par une pluralité de cannelures circonférentielles (48) formées sur la surface extérieure du cylindre (24, 24").

4. Dispositif selon l'une quelconque des revendications 1 à 3, caractérisé en ce que les moyens de fixation de la collerette (26, 26") sur la plaque à tubes sont constitués par une pluralité de cliquets élastiques (44, 44") solidaires de la collerette.

5. Dispositif selon l'une quelconque des revendications 1 à 3, caractérisé en ce que les moyens de fixation de la collerette (26') sur la plaque à tubes, sont constitués par des contre-bagues de serrage (44') comportant des crans à profil complémentaires à des crans formés sur la collerette (38'), lesdites contre-bagues assurant la fixation de la collerette sur le cylindre par des cliquets (46').

6. Dispositif selon l'une quelconque des revendications 1 à 3, caractérisé en ce que les moyens de fixation de la collerette (26, 26") sur le cylindre (24, 24") sont constitués par des cliquets élastiques (46, 46") solidaires de la collerette (26, 26").

7. Dispositif selon l'une quelconque des revendications 1 à 6, caractérisé en ce que le cylindre (24, 24') comporte des encoches (34, 34', 34") destinées à recevoir un lest de montage (36).

8. Dispositif selon l'une quelconque des revendications 1 à 7, caractérisé en ce que la collerette (26, 26', 26") comporte des "godrons" (22).

## Patentansprüche

1. Vorrichtung zur Befestigung eines Rohres (8) an einer Rohrplatte (5), enthaltend einen geraden, hohlen Zylinder (24, 24"), von dem ein Ende eine innere kegelstumpfförmige Bohrung (30) aufweist, die mit einer kegelstumpfförmigen Muffe (20) gleicher Konizität zusammmenwirkt, dadurch gekennzeichnet, daß der genannte Zylinder an wenigstens einem Teil seiner Außenfläche (28, 28") mit Kerben (35) versehen ist, und daß die Vorrichtung weiterhin enthält:
   – einen Bund (26, 26', 26"), der mit Einrichtungen (44, 44', 44") zur Befestigung an der Rohrplatte und mit Einrichtungen (46, 46', 46") zur Befestigung am Zylinder (24, 24") versehen ist, welche Einrichtungen (46, 46', 46") mit den Kerben (35) zusammenwirken; und
   – Dichtungseinrichtungen (42, 48) zwischen dem Bund (26, 26', 26") und dem Zylinder (24, 24").

2. Vorrichtung nach Anspruch 1, dadurch gekennzeichnet, daß die Dichtungseinrichtungen zwischen dem Bund (26, 26', 26") und dem Zylinder (24, 24") von einer elastischen Lippe (42) gebildet sind.

3. Vorrichtung nach Anspruch 1, dadurch gekennzeichnet, daß die Dichtungseinrichtungen zwischen dem Bund (26, 26', 26") und dem Zylinder (24, 24") von mehreren Umfangsnuten (48) gebildet sind, die auf der Außenfläche des Zylinders (24, 24") ausgebildet sind.

4. Vorrichtung nach einem der Ansprüche 1 bis 3, dadurch gekennzeichnet, daß die Einrichtungen zur Befestigung des Bundes (26, 26") an der Rohrplatte von mehreren elastischen Sperrklinken (44, 44") gebildet sind, die mit dem Bund einstückig ausgebildet sind.

5. Vorrichtung nach einem der Ansprüche 1 bis 3, dadurch gekennzeichnet, daß die Einrichtungen zur Befestigung des Bundes (26') an der Rohrplatte von Konterringen (44') gebildet sind, die Kerben mit einem zu den an dem Bund (38') ausgebildeten Kerben komplementären Profil aufweisen, wobei die Konterringe die Befestigung des Bundes an dem Zylinder durch Sperrklinken (46') sicherstellen.

6. Vorrichtung nach einem der Ansprüche 1 bis 3, dadurch gekennzeichnet, daß die Einrichtungen zur Befestigung des Bundes (26', 26") auf dem Zylinder (24, 24") von elastischen Sperrklinken (46, 46") gebildet sind, die einstückig mit dem Bund (26, 26") ausgebildet sind.

7. Vorrichtung nach einem der Ansprüche 1 bis 6, dadurch gekennzeichnet, daß der Zylinder (24, 24') Einkerbungen (34, 34', 34") aufweist, die zur Aufnahme eines Montageballastes (36) bestimmt sind.

8. Vorrichtung nach einem der Ansprüche 1 bis 7, dadurch gekennzeichnet, daß der Bund (26, 26', 26") "Quadrone" (22) aufweist.

## Claims

1. Device for fixing a tube (8) to a tube plate (5) comprising a straight, hollow cylinder (24, 24"), one end of which has an internal frustoconical bore (30) cooperating with a frustoconical sleeve (20) having the same conicity, characterized in that the said cylinder is provided with serrations (35) over at least part of its external surface (28, 28"), the said device comprising in addition:
   – a collar (26, 26', 26") provided with means (44, 44', 44") for effecting fixing to the tube plate and means (46, 46', 46") for effecting fixing to the cylinder (24, 24"), these means (46, 46', 46") cooperating with the serrations (35); and
   – sealing means (42, 48) between the collar (26, 26', 26") and the cylinder (24, 24").

2. Device according to Claim 1, characterized in that the sealing means between the collar (26, 26', 26") and the cylinder (24, 24") consist of an elastic lip (42).

3. Device according to Claim 1, characterized in that the sealing means between the collar (26, 26', 26") and the cylinder (24, 24") consist of a plurality of circumferential ribs (48) formed on the external surface of the cylinder (24, 24").

4. Device according to any one of Claims 1 to 3, characterized in that the means for fixing the collar (26, 26") onto the tube plate consist of a plurality of elastic pawls (44, 44") integral with the collar.

5. Device according to any one of Claims 1 to 3, characterized in that the means for fixing the collar (26') onto the tube plate consist of counter locking rings (44') having profiled serrations matching serrations formed on the collar (38'), the said counterrings ensuring fixing of the collar onto the cylinder by means of pawls (46').

6. Device according to any one of Claims 1 to 3, characterized in that the means for fixing the collar (26, 26") onto the cylinder (24, 24") consist of elastic pawls (46, 46") integral with the collar (26, 26").

7. Device according to any one of Claims 1 to 6, characterized in that the cylinder (24, 24') has notches (34, 34', 34") intended to receive a mounting ballast (36).

8. Device according to any one of Claims 1 to 7, characterized in that the collar (26, 26', 26") has bosses (22).

FIG. 1

EP 0 192 524 B1

FIG. 2

FIG. 5

FIG. 3

FIG. 4